# FASCICULE DE BREVET EUROPEEN

(11) **EP 4 041 575 B1**
(45) Date de publication et mention de la délivrance du brevet: **09.08.2023**
(21) Numéro de dépôt: 20781592.9
(22) Date de dépôt: 07.10.2020
(51) Int. Cl.: B60D 1/48, B62D 53/00, B60D 1/07, B62D 12/02, B62D 21/14, B62D 47/00

(54) **CONVOI AUTOMOBILE ROUTIER À TENUE DE ROUTE AMÉLIORÉE, FORMÉ DE VÉHICULES ATTELABLES**
AUTOMOBILSTRASSENKONVOI MIT VERBESSERTER STRASSENLAGE, DER AUS ANKUPPELBAREN FAHRZEUGEN GEBILDET WIRD
AUTOMOBILE ROAD CONVOY WITH IMPROVED ROADHOLDING THAT IS FORMED BY HITCHABLE VEHICLES

(30) Priorité: 07.10.2019 FR 1911116
(43) Date de publication de la demande: 17.08.2022
(73) Titulaire: Commissariat à l'Energie Atomique et aux Energies Alternatives, 75015 Paris (FR)
(72) Inventeur: CERVANTES, Valéry, 38054 GRENOBLE cedex 09 (FR)
(74) Mandataire: INNOV-GROUP
(86) Numéro de dépôt international: PCT/EP2020/078089
(87) Numéro de publication internationale: WO 2021/069480

(56) Documents cités:
- WO-A1-2005/056308
- DE-A1-102014 010 590
- DE-U1-202014 103 784
- FR-A1- 3 055 286
- FR-A1- 3 071 813
- US-A1- 2016 234 992
- US-A1- 2016 272 223

## Description

### DOMAINE TECHNIQUE

L'invention concerne un véhicule automobile routier attelable. L'invention concerne également un convoi automobile routier formé de plusieurs de ces véhicules attelables.

### ART ANTÉRIEUR

On connait des véhicules automobiles routiers attelables aptes à être attachés entre eux par des attelages sans degré de liberté en rotation en lacet pour former des convois routiers automobiles à trajectoire monotrace. Un tel convoi est apte à être piloté par un unique conducteur. Les demandes de brevet EP2964512 et FR3071813 décrivent des exemples de tels véhicules attelables pour un système de mobilité urbaine.

Ces véhicules attelables comportent typiquement :
- un train de roues avant et un train de roues arrière ;
- une partie avant de châssis sur laquelle est fixée le train de roues avant ;
- une partie arrière de châssis sur laquelle est fixée le train de roues arrière ;
- un dispositif d'articulation, interposé entre la partie avant de châssis et la partie arrière de châssis, ce dispositif d'articulation permettant à la partie avant de châssis de pivoter, par rapport à la partie arrière de châssis, autour d'un axe d'articulation normal à un plan de roulement du véhicule, de manière à modifier un angle d'articulation du véhicule ;
- un attelage avant qui est déplaçable, en alternance, entre :
   - une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de châssis de ce véhicule avec la partie arrière de châssis de l'autre véhicule ; et
   - une position dételée ;
- un attelage arrière qui est déplaçable, en alternance, entre :
   - une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de châssis de ce véhicule avec la partie avant de châssis de l'autre véhicule ; et
   - une position dételée.

Dans la présente description et les revendications, les termes « avant » et « arrière » font référence au sens de marche normal du véhicule.

Du point de vue de la tenue de route, il est apparu préférable que les véhicules articulés et attelables aient quatre roues (le train de roues avant et le train de roues arrière comportant alors chacun deux roues). Les voies des trains avant et arrière sont alors disposées pour que les trains respectifs de deux véhicules puissent s'emboiter. L'emboitement d'un train de roues d'un véhicule avec le train de roues d'un autre véhicule est ici défini comme le fait que les axes des deux trains de roues sont très proches, voire confondus. Autrement dit, toutes les roues des trains de roues qui sont emboités peuvent tourner autour du même axe de rotation.

La voie d'un train de roues est la distance entre les deux roues de ce train de roues appartenant au même essieu. Plus précisément, la voie mesure la distance entre les centres des zones de contact des roues d'un même essieu, mesurée véhicule vide, lorsque les roues sont positionnées de manière symétrique par rapport à un axe médian longitudinal du véhicule.

Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur laquelle circule ce véhicule.

L'attelage est dit être sans degré de liberté si, lorsque deux attelages avant et arrière sont attelés entre eux, l'angle maximal de rotation en lacet de ces attelages l'un par rapport à l'autre dû aux jeux mécaniques est inférieur à 10° ou à 5° ou à 3° ou à 2°.

### EXPOSÉ DE L'INVENTION

Le but de l'invention est d'améliorer la tenue de route des véhicules attelables de l'art antérieur et des convois formés de ces véhicules.

À cet effet l'invention vise un convoi routier automobile comportant au moins deux véhicules automobiles routiers attelés qui comprennent chacun :
- un train de roues avant et un train de roues arrière, chacun de ces trains de roues comportant deux roues ;
- une partie avant de châssis sur laquelle est fixée le train de roues avant ;
- une partie arrière de châssis sur laquelle est fixée le train de roues arrière ;
au moins un de ces véhicules étant un véhicule coupleur qui est défini par une voie de l'un de ses trains de roues qui est différente de la voie de son autre train de roue de sorte que l'un de ses trains de roues est adapté à s'emboiter avec un train de roues situé sur un autre véhicule et dont la voie est identique à celle du train de roues opposé du véhicule coupleur, et un véhicule coupleur étant en outre défini comme comprenant :
- un dispositif d'articulation, interposé entre la partie avant de châssis et la partie arrière de châssis, ce dispositif d'articulation permettant à la partie avant de châssis de pivoter, par rapport à la partie arrière de châssis, autour d'un axe d'articulation normal à un plan de roulement du véhicule, de manière à modifier un angle d'articulation du véhicule ;
- un attelage avant qui est déplaçable, en alternance, entre :
   - une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de châssis de ce véhicule avec la partie arrière de châssis de l'autre véhicule, un train de roues de ce véhicule étant emboité à un train de roues de l'autre véhicule ; et
   - une position dételée ;
- un attelage arrière qui est déplaçable, en alternance, entre :
   - une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de châssis de ce véhicule avec la partie avant de châssis de l'autre véhicule, un train de roues de ce véhicule étant emboité à un train de roues de l'autre véhicule ; et
   - une position dételée ;
ce convoi routier automobile comprenant, à l'une de ses extrémités, un véhicule d'extrémité attelable qui comporte :
- un attelage déplaçable entre :
   - une position attelée dans laquelle ledit véhicule d'extrémité est attelé à un autre véhicule du convoi de sorte qu'un train de roues avant de l'un des véhicules soit emboité à un train de roues arrière de l'autre véhicule ; et
   - une position dételée ;
- un train de roues avant dont la voie est sensiblement égale à la voie du train de roue arrière.

Un tel véhicule automobile routier bénéficie d'une stabilité accrue et d'une meilleure tenue de route. Des véhicules à quatre roues dont la voie du train avant est différente de la voie du train arrière sont connus, spécifiquement dans les applications de véhicules attelables, ce qui est imposé par la nécessité d'emboiter les trains de roues. Cependant, le fait que la voie de l'un des trains de roues soit ajustable permet d'assurer correctement les conditions permettant l'emboitement optimal des trains de roues et permet également de faire bénéficier au véhicule d'une tenue de route optimale, même dans des conditions sévères d'utilisation telles que le déplacement à haute vitesse sur des voies rapides ou le passage de virages serrés.

L'inventeur a en effet identifié que, lorsque plusieurs véhicules sont attelés pour former un convoi routier, des phénomènes d'oscillation se transmettent le long du convoi et portent préjudice à la tenue de route générale du convoi. Ainsi il apparait que le dernier élément d'un convoi est le plus instable. Si le dernier véhicule a par ailleurs une voie plus étroite que le reste du convoi cette criticité est exacerbée.

Par ailleurs, lorsqu'un véhicule attelable est utilisé seul, l'ajustement possible de la voie de l'un de ses trains de roues procure à ce véhicule une tenue de route améliorée.

L'ajustement de la voie du train de roues peut être automatisé, de sorte qu'il adopte ainsi la position adéquate en fonction de l'utilisation (véhicule seul, véhicule au sein d'un convoi, véhicule à l'une des extrémités d'un convoi). Le conducteur bénéficie ainsi d'un véhicule ou d'un convoi de véhicules dont la tenue de route est optimisée, sans intervention de sa part.

Le convoi routier automobile selon l'invention peut comporter les caractéristiques additionnelles suivantes, seules ou en combinaison :
- le véhicule d'extrémité présente une partie avant de châssis qui est rigidement fixée à la partie arrière de châssis ;
- le véhicule d'extrémité est le véhicule de tête du convoi et le véhicule se trouvant en queue de convoi est un véhicule coupleur ;
- le véhicule de tête comporte un dispositif de direction apte à modifier, en réponse à une commande d'un conducteur du véhicule, l'angle de braquage de chaque roue du train de roues avant ;
- le véhicule d'extrémité est le véhicule de queue du convoi et en ce que le véhicule se trouvant en tête de convoi est un véhicule coupleur ;
- le véhicule de queue comporte un train de roues arrière dont les roues sont librement pivotantes en lacet ;
- le véhicule d'extrémité comporte un dispositif d'articulation, interposé entre la partie avant de châssis et la partie arrière de châssis, ce dispositif d'articulation permettant à la partie avant de châssis de pivoter, par rapport à la partie arrière de châssis, autour d'un axe d'articulation normal à un plan de roulement du véhicule, de manière à modifier un angle d'articulation du véhicule ;
- pour le véhicule d'extrémité, un premier train de roues, parmi les trains de roues avant et arrière, présente une voie fixe, et un deuxième train de roues, parmi les trains de roues avant et arrière, présente une voie ajustable entre au moins deux positions : une position resserrée où la voie du deuxième train de roues est inférieure à la voie du premier train de roues, les deux roues du deuxième train de roues étant alors emboitables entre les roues d'un train de roues qui est identique au premier train de roues de ce véhicule et situé sur un autre véhicule lorsque l'attelage correspondant est en position attelée ; et une position élargie où la voie du deuxième train de roues est sensiblement égale à la voie du premier train de roues.

Selon un autre aspect, l'invention concerne également un procédé de constitution d'un convoi automobile routier comportant les étapes suivantes :
- réaliser un attelage d'au moins un véhicule coupleur attelable qui comprend :
   - un train de roues avant et un train de roues arrière, chacun de ces trains de roues comportant deux roues, une voie de l'un des trains de roues étant différente de la voie de l'autre train de roues de sorte que l'un des trains de roues est adapté à s'emboiter avec un train de roues dont la voie est identique à celle du train de roues opposé de ce véhicule coupleur et situé sur un autre véhicule ;
   - une partie avant de châssis sur laquelle est fixée le train de roues avant ;
   - une partie arrière de châssis sur laquelle est fixée le train de roues arrière ;
   - un dispositif d'articulation, interposé entre la partie avant de châssis et la partie arrière de châssis, ce dispositif d'articulation permettant à la partie avant de châssis de pivoter, par rapport à la partie arrière de châssis, autour d'un axe d'articulation normal à un plan de roulement du véhicule, de manière à modifier un angle d'articulation du véhicule ;
   - un attelage avant qui est déplaçable, en alternance, entre :
      - une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de châssis de ce véhicule avec la partie arrière de châssis de l'autre véhicule ; et
      - une position dételée ;
   - un attelage arrière qui est déplaçable, en alternance, entre :
      - une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de châssis de ce véhicule avec la partie avant de châssis de l'autre véhicule ; et
      - une position dételée ;
- atteler, à l'une des extrémités de l'attelage réalisé à l'étape précédente, un véhicule d'extrémité attelable qui comporte un train de roues avant et un train de roues arrière, chacun de ces trains de roues comportant deux roues, la voie du train de roues avant étant sensiblement égale à la voie du train de roue arrière.

Le procédé selon l'invention peut comporter les caractéristiques additionnelles suivantes, seules ou en combinaison :
- l'étape d'attelage du véhicule d'extrémité est réalisée de la manière suivante : atteler, en tête de convoi, un véhicule d'extrémité attelable de tête qui comporte un train de roues avant et un train de roues arrière, chacun de ces trains de roues comportant deux roues, la voie du train de roues avant étant sensiblement égale à la voie du train de roue arrière ;
- l'étape d'attelage du véhicule d'extrémité est réalisée de la manière suivante : atteler, en queue de convoi, un véhicule d'extrémité attelable de queue qui comporte un train de roues avant et un train de roues arrière, chacun de ces trains de roues comportant deux roues, la voie du train de roues avant étant sensiblement égale à la voie du train de roue arrière ;

- le procédé comporte en outre une étape supplémentaire de dételage d'un véhicule d'extrémité ;
- lors de l'étape supplémentaire de dételage d'un véhicule d'extrémité, le véhicule de tête est dételé d'un véhicule antérieur auquel il était attelé, le procédé comportant en outre une étape d'élargissement de la voie du train avant du véhicule postérieur qui devient lui-même le véhicule de tête par l'étape de dételage ;
- lors de l'étape supplémentaire de dételage du véhicule d'extrémité, le véhicule de queue est dételé d'un véhicule antérieur auquel il était attelé, le procédé comportant en outre une étape d'élargissement de la voie du train arrière du véhicule antérieur qui devient lui-même le véhicule de queue par l'étape de dételage.

### PRÉSENTATION DES FIGURES

Un exemple préféré de réalisation de l'invention va maintenant être décrit en référence aux dessins annexés dans lesquels :
[Fig.1] La figure 1 est une vue schématique de dessus d'un véhicule attelable, selon un premier mode de réalisation ;
[Fig.2] La figure 2 est également une vue schématique de dessus d'un véhicule attelable, selon un premier mode de réalisation ;
[Fig.3] La figure 3 est une vue similaire à la figure 1, pour un deuxième mode de réalisation de l'invention ;
[Fig.4] La figure 4 est une vue similaire à la figure 2, pour le deuxième mode de réalisation de l'invention ;
[Fig.5] La figure 5 représente schématiquement une première variante de réalisation des moyens d'ajustement de la voie d'un train de roues des véhicules des figures 1 à 4 ;
[Fig.6] La figure 6 représente une deuxième variante de réalisation de ces moyens d'ajustement ;
[Fig.7] La figure 7 représente également une deuxième variante de réalisation de ces moyens d'ajustement ;
[Fig.8] La figure 8 représente schématiquement un convoi automobile routier formé de trois véhicules conformes aux figures 1 et 2 ;
[Fig.9] La figure 9 représente le convoi de la figure 8, l'un des véhicules ayant son train de roues d'extrémité en position élargie ;
[Fig.10] La figure 10 représente un procédé de constitution de convoi automobile routier selon un premier mode de réalisation ;
[Fig.11] La figure 11 représente également un procédé de constitution de convoi automobile routier selon un premier mode de réalisation ;
[Fig.12] La figure 12 représente schématiquement un convoi automobile routier formé de trois véhicules conformes aux figures 3 et 4 ;
[Fig.13] La figure 13 représente le convoi de la figure 12, l'un des véhicules ayant son train de roues d'extrémité en position élargie ;
[Fig.14] La figure 14 représente un procédé de constitution de convoi automobile routier selon un deuxième mode de réalisation ;
[Fig.15] La figure 15 représente également un procédé de constitution de convoi automobile routier selon un deuxième mode de réalisation.

### DESCRIPTION DÉTAILLÉE

Dans ces figures, les mêmes références sont utilisées pour désigner les mêmes éléments. Le véhicule attelable 1 est décrit selon plusieurs variantes numérotées 1A, 1B, 1C, etc.

Dans la présente description, le véhicule attelable et le convoi routier formé de ces véhicules attelables peuvent être conformes aux véhicules et convois décrits dans la demande de brevet EP2964512, si ce n'est que les caractéristiques relatives à l'ajustement de la voie de certains trains de roues sont différentes. Par conséquent, ces éléments liés à l'ajustement de la voie des trains de roues feront l'objet d'une description ci-après tandis que les autres éléments du véhicule, qui sont donc conformes aux descriptions de l'art antérieur, ne seront pas décrits plus en détail ici.

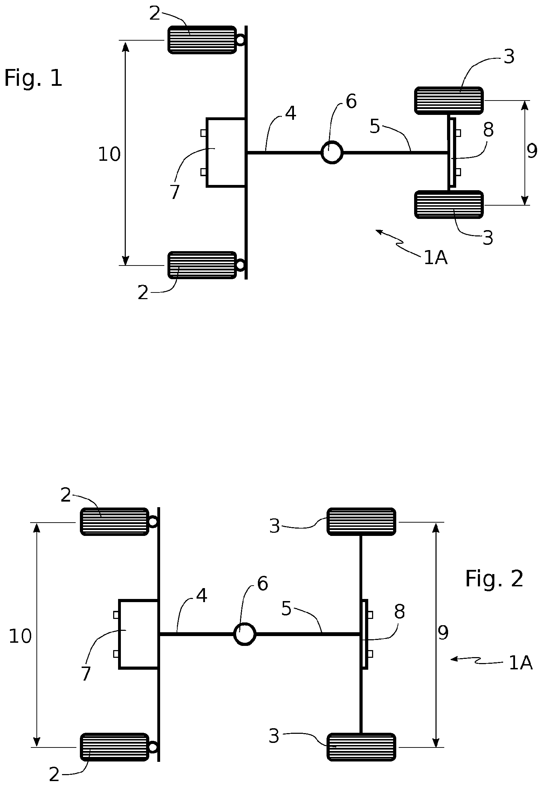

Les figures 1 et 2 sont relatives à un véhicule attelable selon un premier mode de réalisation. Selon ce premier mode de réalisation, la voie du train de roues arrière est ajustable. La structure du véhicule est schématiquement représentée vue de dessus. Le véhicule 1A comporte un train de roues avant 2 et un train de roues arrière 3, chacun de ces trains de roues 2, 3 comportant deux roues.

Le véhicule 1A comporte une partie avant 4 de châssis, sur laquelle est fixé le train de roues avant 2, ainsi qu'une partie arrière 5 de châssis, sur laquelle est fixé le train de roues arrière 3. Entre la partie avant 4 de châssis et la partie arrière 5 de châssis, le véhicule 1A comporte un dispositif d'articulation 6 qui permet à la partie avant 4 de châssis de pivoter, par rapport à la partie arrière 5 de châssis, autour d'un axe d'articulation normal à un plan de roulement du véhicule, c'est-à-dire normal au plan du dessin de la figure 1. Le dispositif d'articulation 6 permet de modifier l'angle d'articulation du véhicule, c'est-à-dire l'angle que forment les deux essieux du véhicule 1A.

Sur le véhicule 1A, les roues avant sont directrices. Le véhicule 1A comporte ainsi un dispositif de direction apte à modifier, en réponse à une commande d'un conducteur du véhicule, l'angle de braquage de chaque roue du train de roues avant 2, ce dispositif de direction étant actionnable indépendamment du dispositif d'articulation 6.

Le véhicule 1A comporte un attelage avant 7 et un attelage arrière 8 complémentaire de sorte que l'attelage avant 7 puisse coopérer avec l'attelage arrière 8 d'un autre véhicule, identique au véhicule 1A. De même, l'attelage arrière 8 peut coopérer avec un attelage avant 7 d'un autre véhicule 1A identique.

Le véhicule 1A est ainsi attelable à d'autres véhicules identiques ou compatibles, en vue de former un convoi automobile routier.

La voie du train de roues arrière 3 est ajustable. Sur la figure 1, le train de roues arrière 3 présente une voie 9 qui est en position resserrée. Dans cette position resserrée, la voie 9 du train arrière 3 est inférieure à la voie 10 du train avant 2, de sorte que le train de roues arrière 3 du véhicule 1A puisse être logé entre les deux roues du train de roues avant 2 d'un autre véhicule 1A. Dans cet exemple, le véhicule 1A garde de plus la possibilité d'actionner le pivotement des roues avant qui sont directrices (pour un angle de braquage limité lorsqu'on est en situation emboitée, et en tous cas inférieur à l'angle de braquage quand on est en situation non emboitée). Dans sa position resserrée du train de roues arrière 3, les roues sont disposées de part et d'autre de l'attelage arrière 8.

Sur la figure 2, le train arrière 3 du véhicule 1A est en position élargie. Dans cette position élargie, la voie 9 du train de roues arrière est alors égale, ou sensiblement égale, à la voie 10 du train de roues avant 2.

Les deux roues du train de roues arrière 3 sont ajustables en translation transversalement (dans une direction parallèle à l'axe d'essieu de ce train de roues).

Dans la position de la figure 1, le véhicule 1A est prêt à être attelé à un autre véhicule, tandis que dans la position de la figure 2, le véhicule 1A est prêt à faire route, seul. Dans la position de la figure 2, le véhicule 1A peut aussi compléter un convoi de véhicules attelables et faire en sorte que les deux trains de roues d'extrémité du convoi aient une voie sensiblement égale.

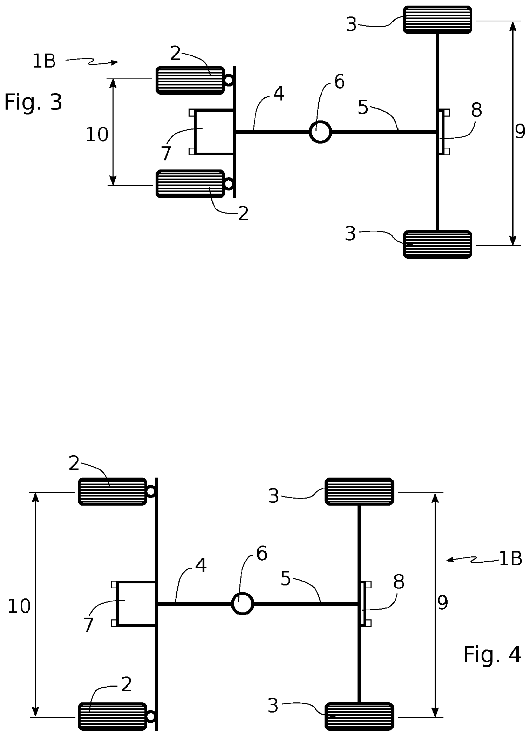

Les figures 3 et 4 sont relatives à un deuxième mode de réalisation d'un véhicule attelable et montrent un véhicule 1B dans lequel la voie du train de roues avant 2 est ajustable. Les roues avant sont directrices et le train de roues arrière présente une voie fixe. Les éléments similaires au premier mode de réalisation seront numérotés avec les mêmes numéros.

Le véhicule 1B comporte donc également un train de roues avant 2, un train de roues arrière 3, respectivement portés par une partie avant 4 de châssis et une partie arrière 5 de châssis. Le véhicule 1B est articulé par un dispositif d'articulation 6. Le véhicule 1B est aussi muni d'un attelage avant 7 et d'un attelage arrière 8.

Sur la figure 3, le train de roues avant 2 du véhicule 1B est montré en position resserrée. Dans cette position, la voie 10 du train de roues avant 2 est inférieure à la voie 9 du train de roues arrière 3. L'avant du véhicule 1B peut donc être attelé à l'arrière d'un véhicule 1B identique. Dans cet exemple, le véhicule 1B garde de plus la possibilité d'actionner le pivotement des roues avant qui sont directrices (pour un angle de braquage limité lorsqu'on est en situation emboitée, et en tous cas inférieur à l'angle de braquage quand on est en situation non emboitée). Dans sa position resserrée du train de roues avant 2, les roues sont disposées de part et d'autre de l'attelage avant 7.

Sur la figure 4, la voie 10 du train de roues avant 2 est en position élargie et est égale, ou sensiblement égale, à la voie 9 du train de roues arrière 3.

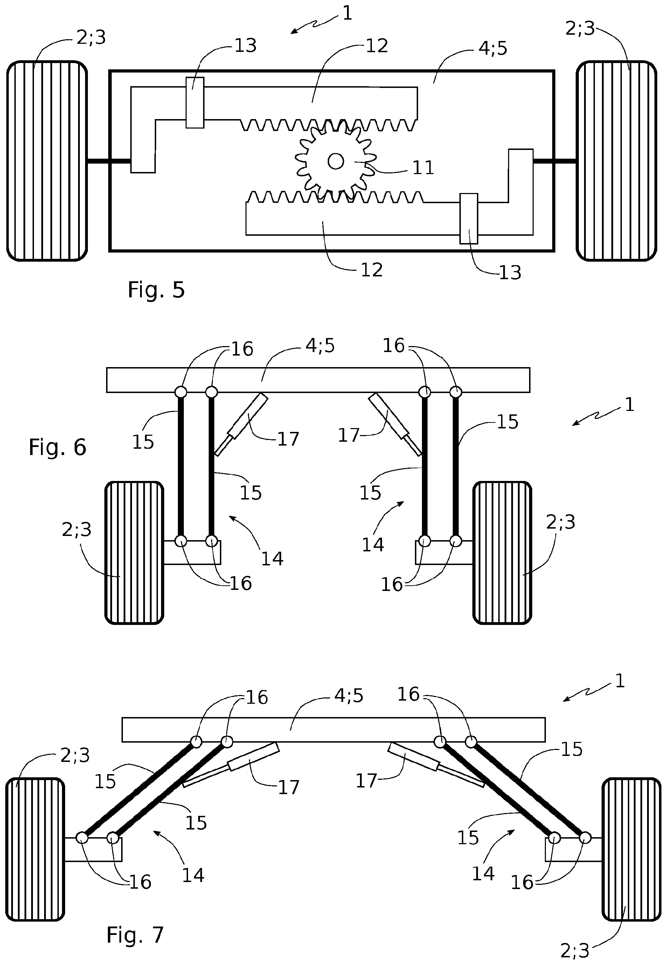

Les figures 5 à 7 sont des exemples de réalisation permettant à la voie d'un train de roues d'être ajustable. Les dispositifs d'ajustement représentés aux figures 5 à 7 peuvent être mis en oeuvre dans le train de roues arrière 3 du véhicule 1A ou dans le train avant 2 du véhicule 1B, en vue de faire varier la voie de ces trains de roues.

La figure 5 est relative à une première variante de réalisation du dispositif d'ajustement de voie. Les moyens d'ajustement comportent un pignon 11 monté sur le châssis du véhicule. Le pignon 11 coopère avec une crémaillère double 12, reliée à l'essieu de chacune des roues du train de roues. Il peut s'agir du train de roues avant 2 (cas du véhicule 1B) ou du train de roues arrière 3 (cas du véhicule 1A). Les crémaillères 12 coulissent dans des paliers 13 fixés au châssis du véhicule, de sorte que la rotation du pignon 11 dans un sens ou dans l'autre entraine respectivement l'écartement ou le resserrement de la voie du train de roues. La rotation du pignon 11 est donc commandée pour placer le train de roues 2, 3 dans sa position resserrée ou dans sa position élargie. La figure 5 est une figure de principe destinée à illustrer le fonctionnement du dispositif d'ajustement de voie, ses dimensions ne sont pas représentatives.

Les figures 6 et 7 illustrent une deuxième variante de réalisation du dispositif d'ajustement de la voie d'un train de roues. De même que précédemment, ces moyens d'ajustement peuvent être mis en oeuvre pour le train de roues avant 2 ou le train de roues arrière 3. Sur les figures 6 et 7, le train de roues concerné est vu de dessus. Selon cette deuxième variante, le dispositif d'ajustement comporte des parallélogrammes déformables 14 pour chaque roue du train de roues 2, 3. Les parallélogrammes déformables 14 comportent des tirants 15, reliant le châssis du véhicule 1 aux essieux du train de roues 2, 3 grâce à des pivots 16 perpendiculaires au plan de roulement du véhicule 1.

Les parallélogrammes déformables 14 sont commandés par des vérins 17 de sorte que le train de roues 2, 3 puisse prendre une position resserrée (figure 6) ou une position élargie (figure 7).

Dans les deux variantes de réalisation des figures 5 à 7, si le train de roues considéré est le train de roues avant 2, ce dernier inclus également, en plus du dispositif d'ajustement de voie, le dispositif de direction permettant aux roues avant de pivoter pour être directrices.

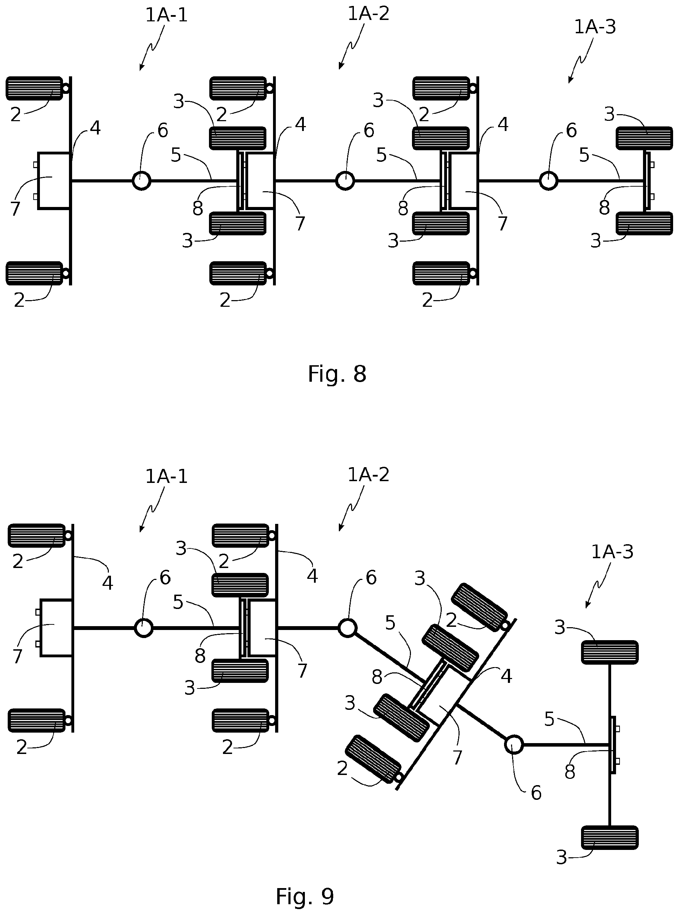

Les figures 8 et 9 représentent schématiquement un convoi automobile routier composé, dans cet exemple, de trois véhicules 1A conformes au premier mode de réalisation des figures 1 et 2. Ces trois véhicules sont ici numérotés 1A-1, 1A-2, 1A-3.

La figure 8 illustre une étape intermédiaire d'un procédé de constitution d'un convoi formé de ces trois véhicules. En effet, la constitution du convoi représenté nécessite que le véhicule 1A-2 soit attelé au véhicule 1A-1 et que le véhicule 1A-3 soit attelé au véhicule 1A-2. Avant son attelage à un autre véhicule, chaque véhicule 1A-1, 1A-2, 1A-3, est un véhicule isolé et sa voie arrière est sensiblement égale à sa voie avant (conformément à la figure 2). Chaque véhicule isolé bénéficie ainsi d'une tenue de route optimale grâce à deux voies sensiblement égales. Lorsqu'un autre véhicule se présente en marche avant pour s'accoupler à l'arrière du véhicule considéré ou si le véhicule considéré se présente en marche arrière pour s'accoupler à l'avant d'un autre véhicule, et ainsi former un convoi tel que celui de la figure 8, le véhicule considéré passe dans un mode où son train de roues arrière 3 est dans sa position rétrécie (conformément à la figure 1). La position rétrécie du train de roues arrière 3 permet l'attelage du véhicule en insérant son train arrière 3 entre les roues du train avant 2 d'un autre véhicule.

Le passage en position rétrécie pour le train de roues arrière 3 peut être commandé, par exemple, en réponse à :
- la détection, par des capteurs situés dans l'attelage arrière 8 d'un véhicule 1A-2, d'une requête d'attelage reçue par l'attelage de son train arrière avec le train avant d'un autre véhicule 1A-3 souhaitant s'atteler ;
- une commande d'attelage donnée par le conducteur du véhicule.

En référence à la figure 8, un nouveau véhicule peut s'atteler à l'avant du convoi (devant le véhicule 1A-1) en rétrécissant sa voie arrière 3, ou à l'arrière du convoi (derrière le véhicule 1A-3).

Si le véhicule 1A-3 est le véhicule de queue du convoi ainsi formé, ce véhicule 1A-3 reste dans la configuration où sa voie arrière 3 est en position élargie, conformément à la figure 9. Le convoi présente ainsi un train de roues d'extrémité arrière (le train de roues arrière 3 du véhicule 1A-3) et un train de roues d'extrémité avant (le train de roues avant 2 du véhicule 1A-1) qui ont sensiblement la même voie. Ce convoi de la figure 9 bénéficie ainsi d'une tenue de route optimisée. La voie du train de roues arrière 3 du véhicule 1A-3 reste donc sensiblement égale à la voie de tous les autres essieux du convoi automobile, c'est-à-dire à la voie des trains de roues avant 2 de tous les véhicules 1 formant le convoi. Les dispositifs d'articulation 6 sont par ailleurs déverrouillés et le convoi automobile est alors opérationnel. De préférence, seuls les dispositifs d'articulation 6 des véhicules 1A-2 et 1A-3 sont déverrouillés, le dispositif d'articulation 6 du véhicule de tête 1A-1 restant verrouillé.

À l'inverse, un véhicule 1A voit son train arrière 3 passer en position élargie lorsqu'il est dételé des autres. Le passage en position élargie pour le train de roues arrière 3 peut être commandé, par exemple, en réponse à :
- la détection, par des capteurs situés dans l'attelage arrière 8 d'un véhicule 1A, du dételage de son train arrière d'avec le train avant d'un autre véhicule 1A, l'élargissement de la voie arrière 3 préparant ainsi le véhicule à rouler comme un véhicule autonome, présentant une voie d'avant et une voie arrière sensiblement égales ; ou
- une commande de dételage donnée par le conducteur du véhicule.

En pratique, le passage en position rétrécie ou élargie peut être réalisée durant une courte phase de roulage, pour éviter que les pneus ne dérapent au sol.

De plus, lors du dételage du véhicule de queue 1A-3 d'un convoi selon la figure 9, ce véhicule de queue 1A-3 est dételé d'un véhicule postérieur 1A-2 auquel il était attelé. Un véhicule postérieur est ici défini comme le véhicule qui, dans le convoi, suit immédiatement un autre véhicule en direction du véhicule de tête. Selon une caractéristique préférée, on élargit alors la voie du train arrière du véhicule postérieur 1A-2, ce dernier devenant alors lui-même le véhicule de queue suite à l'opération de dételage du véhicule de queue initial 1A-3. Le nouveau convoi ainsi formé suite au dételage du véhicule de queue présente également un train de roues d'extrémité arrière et un train de roues d'extrémité avant qui ont sensiblement la même voie.

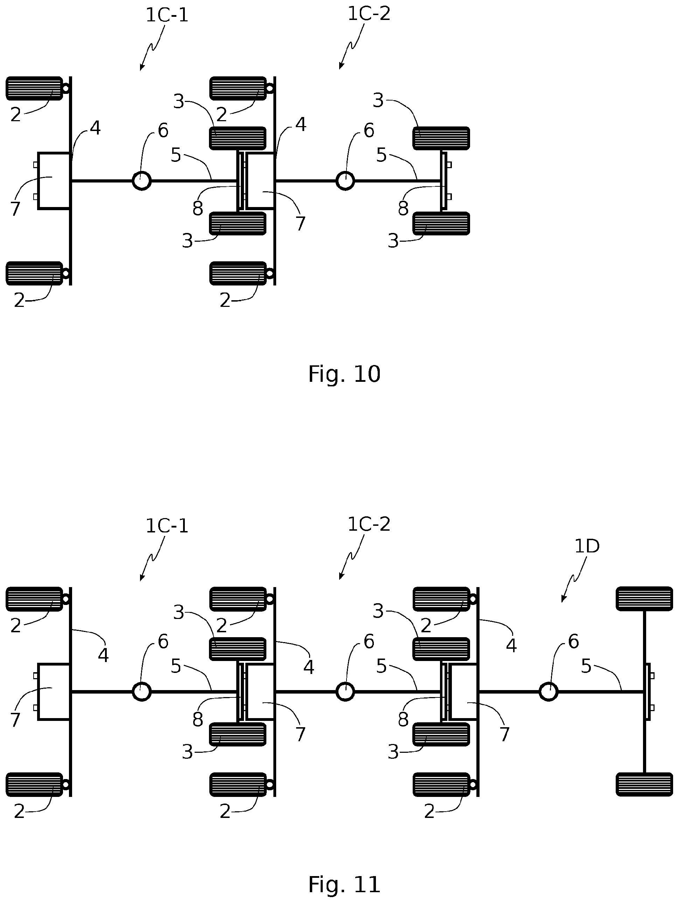

Les figures 10 et 11 illustrent une alternative pour la réalisation du convoi routier de la figure 9. Selon cette alternative, les véhicules attelables ne comportent pas de trains de roues 2, 3 dont la voie est ajustable. Au lieu de cela, le convoi est constitué de deux types de véhicules différents :
- des véhicules 1C dont les trains de roues avant 2 et arrière 3 sont fixes, la voie du train avant 2 étant supérieure à la voie du train arrière 3 ;
- des véhicules 1D dont les trains de roues avant 2 et arrière 3 sont fixes, la voie des deux trains avant et arrière 2, 3 étant sensiblement égale.

Les véhicules 1C et 1D présentent donc chacun toujours la même configuration de trains de roues, celle visible respectivement aux figures 1 et 2.

Durant la constitution du convoi des figures 10 et 11, les véhicules sont choisis parmi les véhicules 1C et 1D en fonction de leur position dans le convoi. Ainsi, conformément à la figure 10, le véhicule de tête du convoi est un véhicule 1C-1, le deuxième véhicule du convoi est un véhicule 1C-2 et ainsi de suite jusqu'à l'avant-dernier véhicule du convoi, celui avant le véhicule de queue. Le véhicule de queue du convoi, quant à lui, est choisi pour être un véhicule 1D, conformément à la figure 11.

Le convoi ainsi constitué, représenté à la figure 11, présente donc les mêmes caractéristiques que le convoi de la figure 9 : la voie du train de roues arrière 3 du véhicule 1D est égale à la voie des autres essieux du convoi.

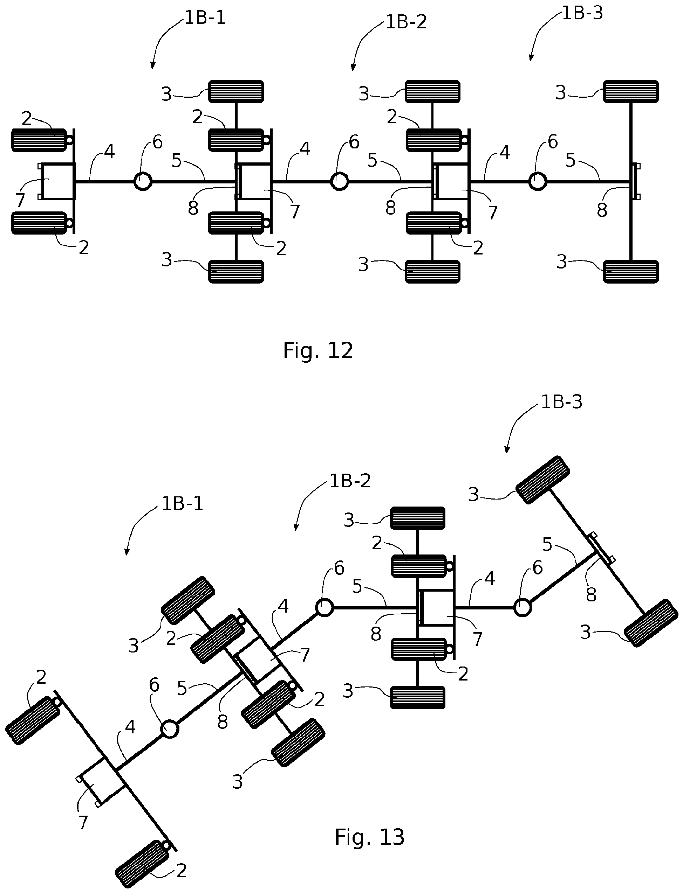

Les figures 12 et 13 sont similaires aux figures 8 et 9, mais concernent le véhicule 1B selon le deuxième mode de réalisation illustré aux figures 3 et 4.

De même que précédemment, la figure 12 illustre le cas où les trois véhicules 1B-1, 1B-2, 1B-3 ont été attelés les uns aux autres. Avant son attelage à un autre véhicule, chaque véhicule 1B-1, 1B-2, 1B-3, est un véhicule isolé et sa voie arrière est sensiblement égale à sa voie avant (conformément à la figure 4). Chaque véhicule isolé bénéficie ainsi d'une tenue de route optimale grâce à deux voies sensiblement égales. Pour venir s'accoupler à un autre véhicule et former le convoi de la figure 12, chaque véhicule 1B-1, 1B-2, 1B-3 passe dans un mode où son train de roues avant 2 est dans sa position rétrécie (conformément à la figure 3). La position rétrécie du train de roues avant 2 permet l'attelage du véhicule en insérant son train avant 2 entre les roues du train arrière 3 d'un autre véhicule.

Le passage en position rétrécie pour le train de roues avant 2 peut être commandé, par exemple, en réponse à :
- la détection, par des capteurs situés dans l'attelage avant 7 d'un véhicule 1B-2, d'une demande d'attelage de son train avant 2 avec le train arrière d'un autre véhicule 1B-1 (cas du véhicule 1B-2 qui s'attèle au véhicule 1B-1 sur la figure 12), le rétrécissement de la voie avant 2 du véhicule 1B-2 permettant ainsi de s'atteler au véhicule 1B-1 ; ou
- une commande d'attelage donnée par le conducteur du véhicule.

En référence à la figure 12, un nouveau véhicule peut s'atteler à l'avant du convoi (devant le véhicule 1B-1) grâce au rétrécissement de la voie avant 2 du véhicule 1B-1, ou à l'arrière du convoi (derrière le véhicule 1B-3), en rétrécissant la voie avant du nouveau véhicule.

Si le véhicule 1B-1 est le véhicule de tête du convoi ainsi formé, ce véhicule 1B-1 reste dans la configuration où sa voie avant 2 est en position élargie, conformément à la figure 13. Le convoi présente ainsi un train de roues d'extrémité arrière (le train de roues arrière 3 du véhicule 1B-3) et un train de roues d'extrémité avant (le train de roues avant 2 du véhicule 1B-1) qui ont sensiblement la même voie. Ce convoi de la figure 13 bénéficie ainsi d'une tenue de route optimisée.

Les dispositifs d'articulation 6 sont par ailleurs déverrouillés et le convoi automobile est alors opérationnel. De préférence, seuls les dispositifs d'articulation 6 des véhicules 1B-2 et 1B-3 sont déverrouillés, le dispositif d'articulation 6 du véhicule de tête 1B-1 restant verrouillé.

À l'inverse, un véhicule 1B voit son train avant 2 passer en position élargie lorsqu'il est dételé des autres. Le passage en position élargie pour le train de roues avant 2 peut être commandé, par exemple, en réponse à :
- la détection, par des capteurs situés dans l'attelage avant 7 d'un véhicule 1B, du dételage de son train avant d'avec le train arrière d'un autre véhicule 1B, l'élargissement de la voie avant 2 préparant ainsi le véhicule à rouler comme un véhicule autonome, présentant une voie d'avant et une voie arrière sensiblement égales ; ou
- une commande de dételage donnée par le conducteur du véhicule.

En pratique, le passage en position rétrécie ou élargie peut être réalisée durant une courte phase de roulage, pour éviter que les pneus ne dérapent au sol.

De plus, lors du dételage du véhicule de tête 1B-1 d'un convoi selon la figure 13, ce véhicule de tête 1B-1 est dételé d'un véhicule postérieur 1B-2 auquel il était attelé. Un véhicule postérieur est ici défini comme le véhicule qui, dans le convoi, suit immédiatement un autre véhicule, en direction du véhicule de queue. Selon une caractéristique préférée, on élargit alors la voie du train avant du véhicule postérieur 1B-2, ce dernier devenant alors lui-même le véhicule de tête suite à l'opération de dételage du véhicule de tête initial 1B-1. Le nouveau convoi ainsi formé suite au dételage du véhicule de tête présente également un train de roues d'extrémité arrière et un train de roues d'extrémité avant qui ont sensiblement la même voie.

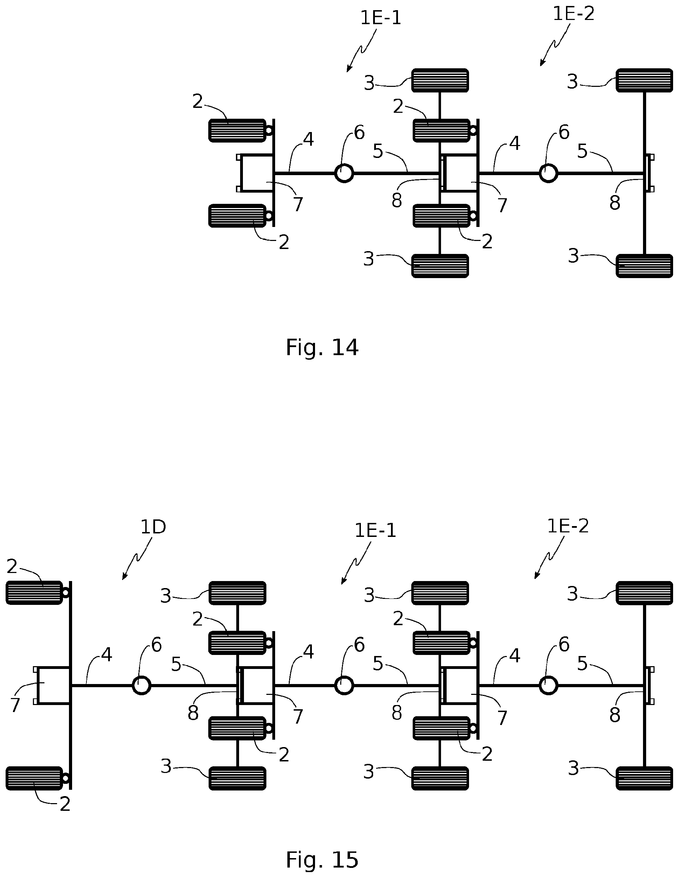

Les figures 14 et 15 illustrent une variante de constitution du convoi de la figure 13. Selon cette variante, de manière similaire à la variante des figures 10 et 11, le convoi des figures 12 et 13 est réalisé par sélection parmi deux types de véhicules 1 :
- des véhicules 1E dont les trains de roues avant 2 et arrière 3 sont fixes, la voie du train avant 2 étant inférieure à la voie du train arrière 3 ;
- des véhicules 1D dont les trains de roues avant 2 et arrière 3 sont fixes, la voie des deux trains avant et arrière 2, 3 étant sensiblement égale.

En référence à la figure 14, le véhicule de queue du convoi est un véhicule 1E-2, qui est attelé à un autre véhicule 1E-1, et ainsi de suite, éventuellement, jusqu'au véhicule de tête qui, quant à lui, est constitué par le choix d'un véhicule 1D. Le convoi, représenté complet à la figure 15 présente ainsi un train de roues d'extrémité arrière et un train de roues d'extrémité avant qui ont sensiblement la même voie. Ce convoi présente les mêmes avantages que le convoi de la figure 13.

D'autres variantes de réalisation peuvent être mises en oeuvre sans sortir du cadre de l'invention. Par exemple, d'autres dispositifs d'ajustement permettant de faire varier la voie d'un train de roues 2, 3, peuvent être mis en oeuvre en complément ou en substitution de ceux décrits ici en exemple.

Par ailleurs, pour le convoi des figures 9, 11, 13 et 15, le véhicule d'extrémité (de tête) dont les trains de roues avant et arrière ont une voie égale peut de plus être commandé pour que son dispositif d'articulation 6 soit verrouillé et que ce véhicule ne soit donc pas articulé dans le convoi, ce qui améliore encore la tenue de route. Pour obtenir le même effet dans le convoi de la figure 15, le véhicule d'extrémité dont les trains de roues avant et arrière ont une voie égale peut, de plus, être dépourvu de dispositif d'articulation et donc présenter une partie avant 2 de châssis rigidement fixée à la partie arrière 3 de châssis. Optionnellement, Dans le cas du convoi des figures 9, 11, 13 et 15, le véhicule de queue du convoi peut aussi voir son articulation bloquée à condition de comporter un train de roues arrière 3 dont les roues sont librement pivotantes en lacet.

## Revendications

1. Convoi routier automobile comportant au moins deux véhicules automobiles routiers (1) attelés qui comprennent chacun :
- un train de roues avant (2) et un train de roues arrière (3), chacun de ces trains de roues (2, 3) comportant deux roues ;
- une partie avant (4) de châssis sur laquelle est fixée le train de roues avant (2) ;
- une partie arrière (5) de châssis sur laquelle est fixée le train de roues arrière (3) ;
au moins un de ces véhicules (1) étant un véhicule coupleur qui est défini par une voie de l'un de ses trains de roues qui est différente de la voie de son autre train de roue de sorte que l'un de ses trains de roues est adapté à s'emboiter avec un train de roues situé sur un autre véhicule et dont la voie est identique à celle du train de roues opposé du véhicule coupleur, et un véhicule coupleur étant en outre défini comme comprenant :
- un dispositif d'articulation (6), interposé entre la partie avant (4) de châssis et la partie arrière (5) de châssis, ce dispositif d'articulation (6) permettant à la partie avant (4) de châssis de pivoter, par rapport à la partie arrière (5) de châssis, autour d'un axe d'articulation normal à un plan de roulement du véhicule (1), de manière à modifier un angle d'articulation du véhicule (1) ;
- un attelage avant (7) qui est déplaçable, en alternance, entre :
• une position attelée, dans laquelle cet attelage avant (7) coopère avec un attelage arrière, identique à l'attelage arrière (8) de ce véhicule (1) et situé sur un autre véhicule, pour attacher mécaniquement, sans degré de liberté en rotation en lacet, ces véhicules entre eux, et aligner la partie avant (4) de châssis de ce véhicule avec la partie arrière de châssis de l'autre véhicule, un train de roues de ce véhicule étant emboité à un train de roues de l'autre véhicule ; et
• une position dételée ;
- un attelage arrière (8) qui est déplaçable, en alternance, entre :
• une position attelée, dans laquelle cet attelage arrière (8) coopère avec un attelage avant, identique à l'attelage avant (7) de ce véhicule (1) et situé sur un autre véhicule, pour attacher mécaniquement, sans degré de liberté en rotation en lacet, ces véhicules entre eux et aligner la partie arrière (5) de châssis de ce véhicule avec la partie avant de châssis de l'autre véhicule, un train de roues de ce véhicule étant emboité à un train de roues de l'autre véhicule ; et
• une position dételée ;
le convoi routier automobile étant **caractérisé en ce qu'**il comprend, à l'une de ses extrémités, un véhicule d'extrémité attelable qui comporte :
- un attelage déplaçable entre :
• une position attelée dans laquelle ledit véhicule d'extrémité est attelé à un autre véhicule du convoi de sorte qu'un train de roues avant de l'un des véhicules soit emboité à un train de roues arrière de l'autre véhicule ; et
• une position dételée ;
- un train de roues avant (2) dont la voie est sensiblement égale à la voie du train de roue arrière (3).

2. Convoi routier automobile selon la revendication 1, **caractérisé en ce que** ledit véhicule d'extrémité présente une partie avant (2) de châssis qui est rigidement fixée à la partie arrière (3) de châssis.

3. Convoi routier automobile selon l'une des revendications précédentes, **caractérisé en ce que** ledit véhicule d'extrémité est le véhicule de tête du convoi et **en ce que** le véhicule se trouvant en queue de convoi est un véhicule coupleur.

4. Convoi routier automobile selon la revendication 3, **caractérisé en ce que** ce véhicule de tête comporte un dispositif de direction apte à modifier, en réponse à une commande d'un conducteur du véhicule, l'angle de braquage de chaque roue du train de roues avant (2).

5. Convoi routier automobile selon l'une des revendications 1 à 2, **caractérisé en ce que** ledit véhicule d'extrémité est le véhicule de queue du convoi et **en ce que** le véhicule se trouvant en tête de convoi est un véhicule coupleur.

6. Convoi routier automobile selon la revendication 5, **caractérisé en ce que** ce véhicule de queue comporte un train de roues arrière (3) dont les roues sont librement pivotantes en lacet.

7. Convoi routier automobile selon la revendication 1, **caractérisé en ce que** ledit véhicule d'extrémité comporte un dispositif d'articulation (6), interposé entre la partie avant (4) de châssis et la partie arrière (5) de châssis, ce dispositif d'articulation (6) permettant à la partie avant (4) de châssis de pivoter, par rapport à la partie arrière (5) de châssis, autour d'un axe d'articulation normal à un plan de roulement du véhicule (1), de manière à modifier un angle d'articulation du véhicule (1).

8. Convoi routier automobile selon l'une quelconque des revendications précédentes, **caractérisé en ce que**, pour ledit véhicule d'extrémité, un premier train de roues, parmi les trains de roues avant (2) et arrière (3), présente une voie fixe, et un deuxième train de roues, parmi les trains de roues avant (2) et arrière (3), présente une voie ajustable entre au moins deux positions :
- une position resserrée où la voie du deuxième train de roues est inférieure à la voie du premier train de roues, les deux roues du deuxième train de roues étant alors emboitables entre les roues d'un train de roues qui est identique au premier train de roues de ce véhicule et situé sur un autre véhicule lorsque l'attelage correspondant est en position attelée ; et
- une position élargie où la voie du deuxième train de roues est sensiblement égale à la voie du premier train de roues.

9. Procédé de constitution d'un convoi automobile routier, **caractérisé en ce qu'**il comporte les étapes suivantes :
- réaliser un attelage d'au moins un véhicule coupleur attelable (1) qui comprend :
- un train de roues avant (2) et un train de roues arrière (3), chacun de ces trains de roues (2, 3) comportant deux roues, une voie de l'un des trains de roues étant différente de la voie de l'autre train de roues de sorte que l'un des trains de roues est adapté à s'emboiter avec un train de roues dont la voie est identique à celle du train de roues opposé de ce véhicule coupleur et situé sur un autre véhicule ;
- une partie avant (4) de châssis sur laquelle est fixée le train de roues avant (2) ;
- une partie arrière (5) de châssis sur laquelle est fixée le train de roues arrière (3) ;
- un dispositif d'articulation (6), interposé entre la partie avant (4) de châssis et la partie arrière (5) de châssis, ce dispositif d'articulation (6) permettant à la partie avant (4) de châssis de pivoter, par rapport à la partie arrière (5) de châssis, autour d'un axe d'articulation normal à un plan de roulement du véhicule (1), de manière à modifier un angle d'articulation du véhicule (1) ;
- un attelage avant (7) qui est déplaçable, en alternance, entre :
• une position attelée, dans laquelle cet attelage avant (7) coopère avec un attelage arrière, identique à l'attelage arrière (8) de ce véhicule (1) et situé sur un autre véhicule, pour attacher mécaniquement, sans degré de liberté en rotation en lacet, ces véhicules entre eux, et aligner la partie avant (4) de châssis de ce véhicule avec la partie arrière de châssis de l'autre véhicule ; et
• une position dételée ;
- un attelage arrière (8) qui est déplaçable, en alternance, entre :
• une position attelée, dans laquelle cet attelage arrière (8) coopère avec un attelage avant, identique à l'attelage avant (7) de ce véhicule (1) et situé sur un autre véhicule, pour attacher mécaniquement, sans degré de liberté en rotation en lacet, ces véhicules entre eux et aligner la partie arrière (5) de châssis de ce véhicule avec la partie avant de châssis de l'autre véhicule ; et
• une position dételée ;
- atteler, à l'une des extrémités de l'attelage réalisé à l'étape précédente, un véhicule d'extrémité attelable qui comporte un train de roues avant (2) et un train de roues arrière (3), chacun de ces trains de roues (2, 3) comportant deux roues, la voie du train de roues avant (2) étant sensiblement égale à la voie du train de roue arrière (3).

10. Procédé selon la revendication 9, **caractérisé en ce que** l'étape d'attelage du véhicule d'extrémité est réalisée de la manière suivante :
- atteler, en tête de convoi, un véhicule d'extrémité attelable de tête qui comporte un train de roues avant (2) et un train de roues arrière (3), chacun de ces trains de roues (2, 3) comportant deux roues, la voie du train de roues avant (2) étant sensiblement égale à la voie du train de roue arrière (3).

11. Procédé selon la revendication 9, **caractérisé en ce que** l'étape d'attelage du véhicule d'extrémité est réalisée de la manière suivante :
- atteler, en queue de convoi, un véhicule d'extrémité attelable de queue qui comporte un train de roues avant (2) et un train de roues arrière (3), chacun de ces trains de roues (2, 3) comportant deux roues, la voie du train de roues avant (2) étant sensiblement égale à la voie du train de roue arrière (3).

12. Procédé selon l'une des revendications 9 à 11, **caractérisé en ce qu'**il comporte en outre une étape supplémentaire de dételage d'un véhicule d'extrémité.

13. Procédé selon la revendication 12, **caractérisé en ce que**, lors de l'étape supplémentaire de dételage d'un véhicule d'extrémité, le véhicule de tête est dételé d'un véhicule antérieur auquel il était attelé, le procédé comportant en outre une étape d'élargissement de la voie du train avant du véhicule postérieur qui devient lui-même le véhicule de tête par l'étape de dételage.

14. Procédé selon la revendication 12, **caractérisé en ce que**, lors de l'étape supplémentaire de dételage du véhicule d'extrémité, le véhicule de queue est dételé d'un véhicule antérieur auquel il était attelé, le procédé comportant en outre une étape d'élargissement de la voie du train arrière du véhicule antérieur qui devient lui-même le véhicule de queue par l'étape de dételage.

## Patentansprüche

1. Straßenfahrzeugzug, welcher mindestens zwei gekuppelte Straßenkraftfahrzeuge (1) aufweist, welche jeweils umfassen:
- einen vorderen Radsatz (2) und einen hinteren Radsatz (3), wobei jeder dieser Radsätze (2, 3) zwei Räder aufweist;
- ein Fahrgestellvorderteil (4), an welchem der vordere Radsatz (2) befestigt ist;
- ein Fahrgestellhinterteil (5), an welchem der hintere Radsatz (3) befestigt ist;
wobei mindestens eines dieser Fahrzeuge (1) ein Kupplungsfahrzeug ist, welches durch eine Spurweite eines seiner Radsätze definiert ist, die von der Spurweite seines anderen Radsatzes verschieden ist, so dass einer seiner Radsätze dazu eingerichtet ist, mit einem Radsatz ineinanderzugreifen, der sich an einem anderen Fahrzeug befindet und dessen Spurweite mit derjenigen des gegenüberliegenden Radsatzes des Kupplungsfahrzeugs identisch ist, und wobei ein Kupplungsfahrzeug außerdem definiert ist als umfassend:
- eine Gelenkvorrichtung (6), die zwischen dem Fahrgestellvorderteil (4) und dem Fahrgestellhinterteil (5) angeordnet ist, wobei diese Gelenkvorrichtung (6) dem Fahrgestellvorderteil (4) ermöglicht, in Bezug auf das Fahrgestellhinterteil (5) um eine zu einer Fahrebene des Fahrzeugs (1) senkrechte Gelenkachse zu schwenken, um so einen Knickwinkel des Fahrzeugs (1) zu ändern;
- eine vordere Kuppelvorrichtung (7), welche abwechselnd verlagerbar ist zwischen:
einer angekuppelten Position, in welcher diese vordere Kuppelvorrichtung (7) mit einer hinteren Kuppelvorrichtung zusammenwirkt, die mit der hinteren Kuppelvorrichtung (8) dieses Fahrzeugs (1) identisch ist und sich an einem anderen Fahrzeug befindet, um diese Fahrzeuge mechanisch, ohne Gier-Freiheitsgrad, miteinander zu verbinden und das Fahrgestellvorderteil (4) dieses Fahrzeugs zu dem Fahrgestellhinterteil des anderen Fahrzeugs auszurichten, wobei ein Radsatz dieses Fahrzeugs mit einem Radsatz des anderen Fahrzeugs ineinandergreift; und
einer abgekuppelten Position;
- eine hintere Kuppelvorrichtung (8), welche abwechselnd verlagerbar ist zwischen:
einer angekuppelten Position, in welcher diese hintere Kuppelvorrichtung (8) mit einer vorderen Kuppelvorrichtung zusammenwirkt, die mit der vorderen Kuppelvorrichtung (7) dieses Fahrzeugs (1) identisch ist und sich an einem anderen Fahrzeug befindet, um diese Fahrzeuge mechanisch, ohne Gier-Freiheitsgrad, miteinander zu verbinden und das Fahrgestellhinterteil (5) dieses Fahrzeugs zu dem Fahrgestellvorderteil des anderen Fahrzeugs auszurichten, wobei ein Radsatz dieses Fahrzeugs mit einem Radsatz des anderen Fahrzeugs ineinandergreift; und
einer abgekuppelten Position;
wobei der Straßenfahrzeugzug **dadurch gekennzeichnet ist, dass** er an einem seiner Enden ein ankuppelbares Endfahrzeug umfasst, welches aufweist:
- eine Kuppelvorrichtung, die verlagerbar ist zwischen:
einer angekuppelten Position, in welcher das Endfahrzeug an ein anderes Fahrzeug des Fahrzeugzuges so angekuppelt ist, dass ein vorderer Radsatz eines der Fahrzeuge mit einem hinteren Radsatz des anderen Fahrzeugs ineinandergreift; und
einer abgekuppelten Position;
- einen vorderen Radsatz (2), dessen Spurweite im Wesentlichen gleich der Spurweite des hinteren Radsatzes (3) ist.

2. Straßenfahrzeugzug nach Anspruch 1, **dadurch gekennzeichnet, dass** das Endfahrzeug ein Fahrgestellvorderteil (2) aufweist, welches an dem Fahrgestellhinterteil (3) starr befestigt ist.

3. Straßenfahrzeugzug nach einem der vorhergehenden Ansprüche, **dadurch gekennzeichnet, dass** das Endfahrzeug das Führungsfahrzeug des Fahrzeugzuges ist, und dadurch, dass das Fahrzeug, das sich am hinteren Ende des Fahrzeugzuges befindet, ein Kupplungsfahrzeug ist.

4. Straßenfahrzeugzug nach Anspruch 3, **dadurch gekennzeichnet, dass** dieses Führungsfahrzeug eine Lenkvorrichtung aufweist, die geeignet ist, in Reaktion auf einen Befehl eines Fahrzeugführers den Einschlagwinkel jedes Rades des vorderen Radsatzes (2) zu ändern.

5. Straßenfahrzeugzug nach einem der Ansprüche 1 bis 2, **dadurch gekennzeichnet, dass** das Endfahrzeug das letzte Fahrzeug des Fahrzeugzuges ist, und dadurch, dass das Fahrzeug, das sich am vorderen Ende des Fahrzeugzuges befindet, ein Kupplungsfahrzeug ist.

6. Straßenfahrzeugzug nach Anspruch 5, **dadurch gekennzeichnet, dass** dieses letzte Fahrzeug einen hinteren Radsatz (3) aufweist, dessen Räder in Gierrichtung frei schwenkbar sind.

7. Straßenfahrzeugzug nach Anspruch 1, **dadurch gekennzeichnet, dass** das Endfahrzeug eine Gelenkvorrichtung (6) aufweist, die zwischen dem Fahrgestellvorderteil (4) und dem Fahrgestellhinterteil (5) angeordnet ist, wobei diese Gelenkvorrichtung (6) dem Fahrgestellvorderteil (4) ermöglicht, in Bezug auf das Fahrgestellhinterteil (5) um eine zu einer Fahrebene des Fahrzeugs (1) senkrechte Gelenkachse zu schwenken, um so einen Knickwinkel des Fahrzeugs (1) zu ändern.

8. Straßenfahrzeugzug nach einem der vorhergehenden Ansprüche, **dadurch gekennzeichnet, dass** für das Endfahrzeug ein erster Radsatz von dem vorderen (2) und dem hinteren (3) Radsatz eine feste Spurweite aufweist und ein zweiter Radsatz von dem vorderen (2) und dem hinteren (3) Radsatz eine Spurweite aufweist, die zwischen mindestens zwei Positionen verstellbar ist:
- einer verengten Position, in der die Spurweite des zweiten Radsatzes kleiner als die Spurweite des ersten Radsatzes ist, wobei die zwei Räder des zweiten Radsatzes dann zwischen die Räder eines Radsatzes einfügbar sind, welcher mit dem ersten Radsatz dieses Fahrzeugs identisch ist und sich an einem anderen Fahrzeug befindet, wenn die entsprechende Kuppelvorrichtung sich in der angekuppelten Position befindet; und
- einer verbreiterten Position, in der die Spurweite des zweiten Radsatzes im Wesentlichen gleich der Spurweite des ersten Radsatzes ist.

9. Verfahren zur Zusammenstellung eines Straßenfahrzeugzuges, **dadurch gekennzeichnet, dass** es die folgenden Schritte umfasst:
■ Herstellen eines Gespanns aus mindestens einem ankuppelbaren Kupplungsfahrzeug (1), welches umfasst:
- einen vorderen Radsatz (2) und einen hinteren Radsatz (3), wobei jeder dieser Radsätze (2, 3) zwei Räder aufweist, wobei eine Spurweite eines der Radsätze von der Spurweite des anderen Radsatzes verschieden ist, so dass einer der Radsätze dazu eingerichtet ist, mit einem Radsatz ineinanderzugreifen, dessen Spurweite mit derjenigen des gegenüberliegenden Radsatzes dieses Kupplungsfahrzeugs identisch ist und der sich an einem anderen Fahrzeug befindet;
- ein Fahrgestellvorderteil (4), an welchem der vordere Radsatz (2) befestigt ist;
- ein Fahrgestellhinterteil (5), an welchem der hintere Radsatz (3) befestigt ist;
- eine Gelenkvorrichtung (6), die zwischen dem Fahrgestellvorderteil (4) und dem Fahrgestellhinterteil (5) angeordnet ist, wobei diese Gelenkvorrichtung (6) dem Fahrgestellvorderteil (4) ermöglicht, in Bezug auf das Fahrgestellhinterteil (5) um eine zu einer Fahrebene des Fahrzeugs (1) senkrechte Gelenkachse zu schwenken, um so einen Knickwinkel des Fahrzeugs (1) zu ändern;
- eine vordere Kuppelvorrichtung (7), welche abwechselnd verlagerbar ist zwischen:
einer angekuppelten Position, in welcher diese vordere Kuppelvorrichtung (7) mit einer hinteren Kuppelvorrichtung zusammenwirkt, die mit der hinteren Kuppelvorrichtung (8) dieses Fahrzeugs (1) identisch ist und sich an einem anderen Fahrzeug befindet, um diese Fahrzeuge mechanisch, ohne Gier-Freiheitsgrad, miteinander zu verbinden und das Fahrgestellvorderteil (4) dieses Fahrzeugs zu dem Fahrgestellhinterteil des anderen Fahrzeugs auszurichten; und
einer abgekuppelten Position;
- eine hintere Kuppelvorrichtung (8), welche abwechselnd verlagerbar ist zwischen:
einer angekuppelten Position, in welcher diese hintere Kuppelvorrichtung (8) mit einer vorderen Kuppelvorrichtung zusammenwirkt, die mit der vorderen Kuppelvorrichtung (7) dieses Fahrzeugs (1) identisch ist und sich an einem anderen Fahrzeug befindet, um diese Fahrzeuge mechanisch, ohne Gier-Freiheitsgrad, miteinander zu verbinden und das Fahrgestellhinterteil (5) dieses Fahrzeugs zu dem Fahrgestellvorderteil des anderen Fahrzeugs auszurichten; und
einer abgekuppelten Position;
■ Ankuppeln, an eines der Enden des im vorhergehenden Schritt hergestellten Gespanns, eines ankuppelbaren Endfahrzeugs, welches einen vorderen Radsatz (2) und einen hinteren Radsatz (3) aufweist, wobei jeder dieser Radsätze (2, 3) zwei Räder aufweist, wobei die Spurweite des vorderen Radsatzes (2) im Wesentlichen gleich der Spurweite des hinteren Radsatzes (3) ist.

10. Verfahren nach Anspruch 9, **dadurch gekennzeichnet, dass** der Schritt des Ankuppelns des Endfahrzeugs auf folgende Weise ausgeführt wird:
- Ankuppeln, am vorderen Ende des Fahrzeugzuges, eines ankuppelbaren Führungs-Endfahrzeugs, welches einen vorderen Radsatz (2) und einen hinteren Radsatz (3) aufweist, wobei jeder dieser Radsätze (2, 3) zwei Räder aufweist, wobei die Spurweite des vorderen Radsatzes (2) im Wesentlichen gleich der Spurweite des hinteren Radsatzes (3) ist.

11. Verfahren nach Anspruch 9, **dadurch gekennzeichnet, dass** der Schritt des Ankuppelns des Endfahrzeugs auf folgende Weise ausgeführt wird:
- Ankuppeln, am hinteren Ende des Fahrzeugzuges, eines ankuppelbaren Schluss-Endfahrzeugs, welches einen vorderen Radsatz (2) und einen hinteren Radsatz (3) aufweist, wobei jeder dieser Radsätze (2, 3) zwei Räder aufweist, wobei die Spurweite des vorderen Radsatzes (2) im Wesentlichen gleich der Spurweite des hinteren Radsatzes (3) ist.

12. Verfahren nach einem der Ansprüche 9 bis 11, **dadurch gekennzeichnet, dass** es außerdem einen zusätzlichen Schritt des Abkuppelns eines Endfahrzeugs umfasst.

13. Verfahren nach Anspruch 12, **dadurch gekennzeichnet, dass** in dem zusätzlichen Schritt des Abkuppelns eines Endfahrzeugs das Führungsfahrzeug von einem vorherigen Fahrzeug, an das es angekuppelt war, abgekuppelt wird, wobei das Verfahren außerdem einen Schritt der Verbreiterung der Spurweite des vorderen Radsatzes des nachfolgenden Fahrzeugs umfasst, welches durch den Schritt des Abkuppelns selbst zum Führungsfahrzeug wird.

14. Verfahren nach Anspruch 12, **dadurch gekennzeichnet, dass** in dem zusätzlichen Schritt des Abkuppelns des Endfahrzeugs das Schlussfahrzeug von einem vorausfahrenden Fahrzeug, an das es angekuppelt war, abgekuppelt wird, wobei das Verfahren außerdem einen Schritt der Verbreiterung der Spurweite des hinteren Radsatzes des vorausfahrenden Fahrzeugs umfasst, welches durch den Schritt des Abkuppelns selbst zum Schlussfahrzeug wird.

## Claims

1. Road motor vehicle convoy comprising at least two hitched road motor vehicles (1) each comprising:
- a front axle system (2) and a rear axle system (3), each of these axle systems (2, 3) comprising two wheels;
- a front chassis part (4) to which the front axle system (2) is fixed;
- a rear chassis part (5) to which the rear axle system (3) is fixed;
at least one of these vehicles (1) being a coupler vehicle which is defined by a track of one of its axle systems which is different from the track of its other axle system such that one of its axle systems is able to be fitted with an axle system situated on another vehicle and the track of which is identical to that of the opposite axle system of the coupler vehicle, and a coupler vehicle being further defined as comprising:
- an articulation device (6) interposed between the front chassis part (4) and the rear chassis part (5), this articulation device (6) allowing the front chassis part (4) to pivot, with respect to the rear chassis part (5), about an articulation axis normal to a centre line of the vehicle (1), so as to modify an angle of articulation of the vehicle (1);
- a front hitch (7) which can be displaced, alternately, between:
• a hitched position, in which this front hitch (7) cooperates with a rear hitch, identical to the rear hitch (8) of this vehicle (1) and situated on another vehicle, to mechanically attach with no degree of freedom in yaw rotation, these vehicles to one another, and align the front chassis part (4) of this vehicle with the rear chassis part of the other vehicle, an axle system of this vehicle being fitted to an axle system of the other vehicle; and
• an unhitched position;
- a rear hitch (8) which can be displaced, alternately, between:
• a hitched position, in which this rear hitch (8) cooperates with a front hitch, identical to the front hitch (7) of this vehicle (1) and situated on another vehicle, to mechanically attach, with no degree of freedom in yaw rotation, these vehicles to one another and align the rear chassis part (5) of this vehicle with the front chassis part of the other vehicle, an axle system of this vehicle being fitted to an axle system of the other vehicle; and
• an unhitched position;
the road motor vehicle convoy being **characterized in that** it comprises, at one of its ends, a hitchable end vehicle which comprises:
- a hitch that can be displaced between:
• a hitched position in which this end vehicle is hitched to another vehicle of the convoy such that a front axle system of one of the vehicles is fitted to a rear axle system of the other vehicle; and
• an unhitched position;
- a front axle system (2), the track of which is substantially equal to the track of the rear axle system (3).

2. Road motor vehicle convoy according to Claim 1, **characterized in that** said end vehicle has a front chassis part (2) which is rigidly fixed to the rear chassis part (3).

3. Road motor vehicle convoy according to one of the preceding claims, **characterized in that** said end vehicle is the lead vehicle of the convoy and **in that** the vehicle located at the tail of the convoy is a coupler vehicle.

4. Road motor vehicle convoy according to Claim 3, **characterized in that** this lead vehicle comprises a steering device capable of modifying, in response to a command from a driver of the vehicle, the steering lock angle of each wheel of the front axle system (2).

5. Road motor vehicle convoy according to one of Claims 1 and 2, **characterized in that** said end vehicle is the tail vehicle of the convoy and **in that** the vehicle located at the head of the convoy is a coupler vehicle.

6. Road motor vehicle convoy according to Claim 5, **characterized in that** this tail vehicle comprises a rear axle system (3), the wheels of which are free to pivot in yaw.

7. Road motor vehicle convoy according to Claim 1, **characterized in that** said end vehicle comprises an articulation device (6), interposed between the front chassis part (4) and the rear chassis part (5), this articulation device (6) allowing the front chassis part (4) to pivot, with respect to the rear chassis part (5), about an articulation axis normal to a centre line of the vehicle (1), so as to modify an angle of articulation of the vehicle (1).

8. Road motor vehicle convoy according to any one of the preceding claims, **characterized in that**, for said end vehicle, a first axle system, out of the front (2) and rear (3) axle systems, has a fixed track, and a second axle system, out of the front (2) and rear (3) axle systems, has a track that can be adjusted between at least two positions:
- a closer position in which the track of the second axle system is less than the track of the first axle system, the two wheels of the second axle system being then able to be fitted between the wheels of an axle system which is identical to the first axle system of this vehicle and situated on another vehicle when the corresponding hitch is in hitched position; and
- a wider position in which the track of the second axle system is substantially equal to the track of the first axle system.

9. Method for constructing a road motor vehicle convoy, **characterized in that** it comprises the following steps:
- producing a hitch of at least one hitchable coupler vehicle (1) which comprises:
- a front axle system (2) and a rear axle system (3), each of these axle systems (2, 3) comprising two wheels, a track of one of the axle systems being different from the track of the other axle system such that one of the axle systems is able to be fitted with an axle system whose track is identical to that of the opposite axle system of this coupler vehicle and situated on another vehicle;
- a front chassis part (4) to which the front axle system (2) is fixed;
- a rear chassis part (5) to which the rear axle system (3) is fixed;
- an articulation device (6), interposed between the front chassis part (4) and the rear chassis part (5), this articulation device (6) allowing the front chassis part (4) to pivot, with respect to the rear chassis part (5), about an articulation axis normal to a centre line of the vehicle (1), so as to modify an angle of articulation of the vehicle (1);
- a front hitch (7) which can be displaced, alternately, between:
• a hitched position, in which this front hitch (7) cooperates with a rear hitch, identical to the rear hitch (8) of this vehicle (1) and situated on another vehicle, to mechanically attach, with no degree of freedom in yaw rotation, these vehicles to one another, and align the front chassis part (4) of this vehicle with the rear chassis part of the other vehicle; and
• an unhitched position;
- a rear hitch (8) which can be displaced, alternately, between:
• a hitched position, in which this rear hitch (8) cooperates with a front hitch, identical to the front hitch (7) of this vehicle (1) and situated on another vehicle, to mechanically attach, with no degree of freedom in yaw rotation, these vehicles to one another and align the rear chassis part (5) of this vehicle with the front chassis part of the other vehicle; and
• an unhitched position;
- hitching, to one of the ends of the hitch produced in the preceding step, a hitchable end vehicle which comprises a front axle system (2) and a rear axle system (3), each of these axle systems (2, 3) comprising two wheels, the track of the front axle system (2) being substantially equal to the track of the rear axle system (3).

10. Method according to Claim 9, **characterized in that** the step of hitching of the end vehicle is performed in the following manner:
- hitching, at the head of the convoy, a lead hitchable end vehicle which comprises a front axle system (2) and a rear axle system (3), each of these axle systems (2, 3) comprising two wheels, the track of the front axle system (2) being substantially equal to the track of the rear axle system (3).

11. Method according to Claim 9, **characterized in that** the step of hitching of the end vehicle is performed in the following manner:
- hitching, at the tail of the convoy, a tail hitchable end vehicle which comprises a front axle system (2) and a rear axle system (3), each of these axle systems (2, 3) comprising two wheels, the track of the front axle system (2) being substantially equal to the track of the rear axle system (3).

12. Method according to one of Claims 9 to 11, **characterized in that** it further comprises an additional step of unhitching of an end vehicle.

13. Method according to Claim 12, **characterized in that**, in the additional step of unhitching of an end vehicle, the lead vehicle is unhitched from a vehicle in front of it to which it was hitched, the method further comprising a step of widening of the track of the front axle system of the vehicle behind which itself becomes the lead vehicle through the unhitching step.

14. Method according to Claim 12, **characterized in that**, in the additional step of unhitching of the end vehicle, the tail vehicle is unhitched from a vehicle in front of it to which it was hitched, the method further comprising a step of widening of the track of the rear axle system of the vehicle in front which itself becomes the tail vehicle through the unhitching step.
